# FASCICULE DE BREVET EUROPEEN

(11) **EP 4 252 326 B1**
(45) Date de publication et mention de la délivrance du brevet: **11.03.2026**
(21) Numéro de dépôt: 21827397.7
(22) Date de dépôt: 30.11.2021
(51) Int. Cl.: H02G 1/14, H02G 3/08, H02G 15/064, H02G 15/22

(54) **BORNE ANTI-DEFLAGRATION POUR TERMINAISON EXTERIEURE A HAUTE TENSION**
EXPLOSIONSGESCHÜTZTE KLEMME FÜR HOCHSPANNUNGSKABELENDVERSCHLUSS IM FREIEN
EXPLOSION-PROOF TERMINAL FOR OUTDOOR HIGH VOLTAGE CABLE TERMINATION

(30) Priorité: 30.11.2020 FR 2012434
(43) Date de publication de la demande: 04.10.2023
(73) Titulaire: Nexans, 92400 Courbevoie (FR)
(72) Inventeur: GENIN, Guillaume, 2016 Cortaillod (CH); BATTISTOLO, Tom, 25500 Morteau (FR); ERNST, Eric, 1400 Yverdon (CH); AIT AMAR, Abdellatif, 62730 Marck (FR); AUE, Volker, 44137 Dortmund (DE)
(74) Mandataire: Acapo Onsagers AS
(86) Numéro de dépôt international: PCT/FR2021/052140
(87) Numéro de publication internationale: WO 2022/112728

(56) Documents cités:
- JP-A- S5 487 896
- KR-A- 20160 027 659

## Description

L'invention concerne un accessoire de terminaison de câble de transport électrique à haute ou très haute tension, et notamment une borne anti-déflagration disposée en extérieur autour d'une terminaison d'un tel câble à haute tension.

Tel que décrit dans les documents de brevet CN-201590642 et EP 2 259 401, il est connu qu'une terminaison d'un câble est couplée à un connecteur à l'intérieur d'une borne étanche comportant un manchon isolant contenant une huile isolante, une platine inférieure et une platine supérieure, les platines obturant respectivement le manchon à ses deux extrémités opposées, et un dispositif de décharge de la pression interne. Il est connu du document JP-S54-87896 un dispositif de décharge de la pression interne au niveau de la platine supérieure d'une borne.

Lorsque le câble est dans un état de fonctionnement anormal, et qu'une intensité interne se développe dans le câble, la pression de l'huile isolante augmente très fortement et très rapidement. La borne étanche est pourvue, au niveau de la platine supérieure, d'un dispositif de sécurité pour permettre une évacuation de la pression hors de la borne afin d'éviter une explosion littérale du manchon.

Selon le document CN-201590642, la platine supérieure est pourvue d'un trou antidéflagrant obturé par un film antidéflagrant, tel que la chimie de ce film est prévue pour se rompre sous certaines conditions de pression et température, et ainsi découvrir l'orifice permettant l'évacuation de la pression. De structure simple, cette solution n'offre pas une sécurité, ni une fiabilité suffisante, car l'orifice est de petit diamètre et des débris de câble apparaissant dans le manchon peuvent l'obturer à nouveau, empêchant ainsi le dispositif de fonctionner durablement. Par ailleurs, le film antidéflagrant a un vieillissement dont on ne peut pas facilement surveiller le temps de vie.

Le document EP 2 259 401 propose une solution dans laquelle la platine supérieure comporte un disque de rupture destiné à former une ouverture de décharge de pression. En particulier, ce disque de rupture est un disque annulaire en acier pourvu de lignes de moindre épaisseur s'étendant radialement autour d'un orifice de passage du câble au travers de la platine supérieure. Ces lignes délimitent des languettes radiales aptes à se rompre sous certaines conditions de pression et de température à l'intérieur du manchon.

D'autres bornes anti-déflagration d'une terminaison de câble sont connus de JP S54 87896 A et KR 2016 0027659 A.

Il est néanmoins apparu un besoin d'améliorer la sécurité des biens et personnes pouvant se situer aux alentours de telles bornes anti-déflagration, en évitant totalement la dispersion de particules métalliques en cas d'atteinte de ces conditions de pression et de température mettant en œuvre le dispositif de décharge de pression interne. En particulier, cette sécurité est plus particulièrement requise pour les câbles destiné au transport électrique de tension entre 36 kV et 550 kV, dont le fonctionnement est régi par les normes IEC 60840 et IEC 62067 en courant alternatif et les normes IEC 62895 et CIGRE TB 496 en courant continu. Ces bornes anti-déflagration sont imposantes, entre 1 à 2 mètres de haut, et sont testées pour des tensions d'arc interne très élevées.

L'objet de l'invention est de proposer une borne extérieure anti-déflagration permettant une activation très rapide du dispositif de décharge de pression interne, et que la diminution de la pression interne soit obtenue très rapidement et de manière conséquence après l'activation.

Pour ce faire, l'invention propose une borne anti-déflagration d'une terminaison d'un câble de transport électrique à haute tension, la borne comportant un manchon, une platine inférieure et une platine supérieure, la borne définissant une enceinte étanche autour de la terminaison du câble, cette enceinte étanche contenant un fluide isolant, la borne comportant un dispositif de décharge de pression interne, caractérisé en ce que la platine supérieure comporte un fourreau solidaire du manchon, une plaque et un moyen de fermeture pour retenir la plaque avec le fourreau , le dispositif de décharge de pression interne comportant une rondelle à épaulement coopérant avec le moyen de fermeture et le fourreau. La borne anti-déflagration selon l'invention comprend par ailleurs toutes les caractéristiques définies à la revendication 1.

Le manchon peut également être appelé isolateur. De préférence l'enceinte est étanche aux huiles, mais peut être également étanche aux gaz. Il s'agit d'une étanchéité sous conditions de température et de pression habituelles. Par exemple, pour assurer l'étanchéité entre la platine supérieure et le manchon, la borne comporte un joint annulaire comprimé entre la plaque et le fourreau, ou entre la plaque et le manchon par le moyen de fermeture. Le fonctionnement de la borne anti-explosion prévoit un mécanisme de rupture de l'étanchéité afin d'éviter l'explosion. L'intérêt de la rondelle à épaulement est qu'elle peut être structurellement modifiée sous l'effet de la pression et ainsi autoriser un échappement du fluide pressurisé sous l'effet d'une augmentation brutale de la température à l'intérieur de l'enceinte. La déformation structurelle de la rondelle autorise un mouvement relatif entre le moyen de fermeture et le fourreau, autorisant ainsi la rupture de l'étanchéité.

De préférence, la rondelle à épaulement peut comporter une collerette d'épaisseur (e) inférieure à 1/3 d'une épaisseur maximale de la rondelle. Cette collerette peut présenter une dimension radiale (r) inférieure à la moitié, notamment de l'ordre de 40% d'une dimension radiale (R) de la rondelle. Cette collerette définit une zone de fragilité préférentielle, ayant tendance à se déformer à une pression inférieure à celle nécessaire pour déformer une portion d'épaisseur maximale de cette rondelle.

Le moyen de fermeture comporte une vis et un écrou, une paroi du fourreau étant pourvue d'un alésage longitudinal et la plaque supérieure étant pourvue d'un orifice, de telle sorte que la vis traverse cet orifice et l'alésage, la vis et l'écrou coopérant pour retenir la plaque en contact avec le fourreau.

La rondelle à épaulement est disposée autour de la vis entre l'écrou et le fourreau.

Enfin, le moyen de fermeture peut comporter une vis et deux écrous, l'un des écrous étant borgne, l'autre étant traversant, l'écrou traversant étant alors disposé entre la rondelle à épaulement et l'écrou borgne. Selon un mode avantageux de réalisation, le dispositif de décharge de pression interne comporte un tube de compression au contact de la rondelle à épaulement, de sorte qu'en cas de déformation de la rondelle, le mouvement relatif entre le moyen de fermeture et le fourreau est amorti par une déformation progressive du tube de compression. Le tube de compression peut notamment être logé dans un alésage du fourreau autour d'une vis du moyen de fermeture.

De préférence, le tube de compression peut être disposé coulissant le long de la vis, de sorte qu'il a une longueur axiale inférieure à celle de l'alésage. Ainsi avant que l'amorti du tube de compression ne ralentisse le mouvement relatif entre le moyen de fermeture et le fourreau, un premier débattement entre la plaque et le fourreau est permis. Un débattement amorti supplémentaire est alors fourni par la compression axiale du tube de compression dans le fourreau.

L'alésage peut déboucher axialement en partie haute et en partie basse, le long d'un axe longitudinal (X) de la borne. Et la rondelle à épaulement peut notamment définir un pourtour extérieur de section circulaire, l'alésage définissant également un pourtour intérieur de section circulaire.

Il est également décrit une borne anti-déflagration d'une terminaison d'un câble de transport électrique à haute tension, la borne comportant un manchon, une platine inférieure et une platine supérieure, la borne définissant une enceinte étanche autour de la terminaison du câble, cette enceinte étanche contenant un fluide isolant, la borne comportant un dispositif de décharge de pression interne, caractérisé en ce que la platine supérieure comporte un fourreau solidaire du manchon, une plaque et un moyen de fermeture pour retenir la plaque avec le fourreau , le dispositif de décharge de pression interne comportant un tube de compression retenu entre l'écrou et le fourreau.

Selon l'invention, le tube de compression peut être percé transversalement, notamment radialement.

Plus particulièrement, pour garantir l'étanchéité de l'enceinte, la borne peut comporter un joint d'étanchéité annulaire prévu entre un bord supérieur du fourreau et une face interne de la plaque.

### Brève description des dessins

La présente invention sera mieux comprise à l'étude de la description détaillée d'un mode de réalisation pris à titre d'exemple nullement limitatif et illustré par des dessins annexés, sur lesquels :
[Fig. 1] représente une vue en perspective d'une borne anti-déflagration selon l'invention ;
[Fig. 2] représente une vue en coupe longitudinale de la borne de la figure 1 d'une borne selon l'invention ;
[Fig. 3] représente une vue longitudinale de détail correspondant à l'encart A de la figure 2 d'une borne selon l'invention ;
[Fig. 4] est une vue en perspective d'une rondelle à épaulement un dispositif de décharge de pression interne d'une borne selon l'invention ;
[Fig. 5] est une vue en coupe longitudinale d'une rondelle à épaulement selon la Figure 4,
[Fig. 6] est une vue de profil extérieur d'un tube de compression mis en œuvre dans un dispositif de décharge de pression interne d'une borne selon l'invention, le tube de compression coopérant avec la rondelle à épaulement;
[Fig. 7] est une vue en coupe transversale d'un tube de compression selon le plan de coupe VII-VII présenté Figure 6 ;
[Fig. 8] est une vue longitudinale de détail correspondant à une variante de réalisation de la Figure 3 non couverte par les revendications.

### Description de mode(s) de réalisation

Les dessins annexés pourront non seulement servir à compléter l'invention mais aussi contribuer à sa définition, le cas échéant.

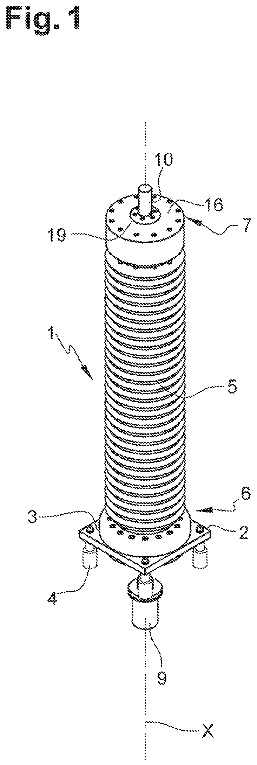

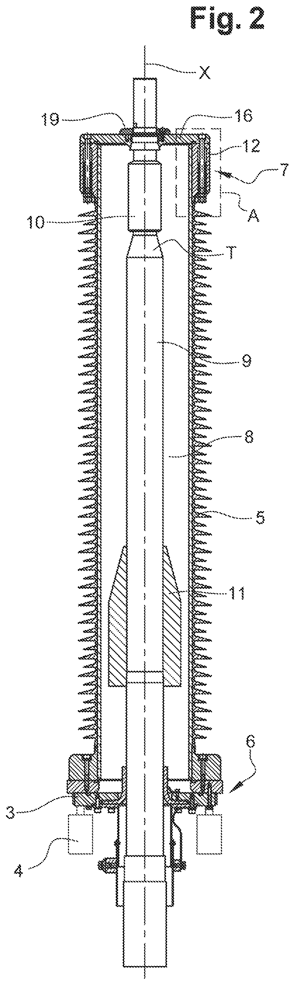

Comme représenté sur la figure 1, une borne anti-déflagration 1 est notamment prévue pour être disposée à la verticale relativement au sol, de sorte qu'il est possible de définir les notions d'inférieur et supérieur relativement à un axe X perpendiculaire au sol. Pour une utilisation en plein air ou en intérieur placée sur une base, la borne comporte une armature de pied 2 permettant le montage vertical. L'armature de pied comporte un plateau 3 et des moyens de fixations 4 placés sur ce plateau pour un montage de telle sorte que le plateau 3 puisse être disposé sensiblement parallèle au sol. La borne comporte également un manchon 5 dressé verticalement au-dessus du plateau 3. Le manchon 5 coopère avec une platine inférieure 6 et une platine supérieure 7 pour délimiter une enceinte 8 (Fig 2) sensiblement cylindrique, d'axe longitudinal X au-dessus du plateau 3. Un câble 9 est disposé dans la borne. Ce câble 9 arrive sous le plateau 3 et entre de manière étanche dans l'enceinte 8 où une terminaison T de ce câble est couplée en partie haute avec un connecteur 10. Le connecteur 10 dépasse de la platine supérieure 7 de manière étanche.

Le manchon 5 est par exemple pourvu sur son pourtour extérieur d'ailettes radiales. L'enceinte 8 est étanche et contient un fluide isolant, de préférence une huile liquide isolante. Un cône déflecteur 11 est monté autour du câble 9 dans sa partie située dans l'enceinte 8.

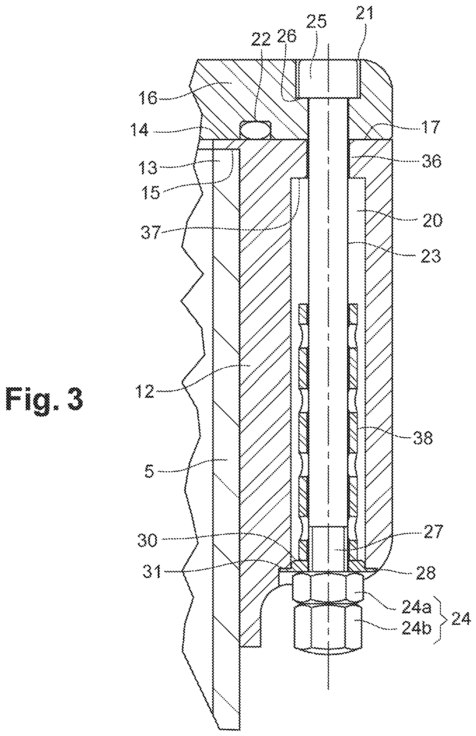

La platine supérieure 7 comporte, Figure 3, un fourreau 12 soudé à une extrémité 13 du manchon 5. Le fourreau 12 a une structure tubulaire pourvu d'un renfort radialement intérieur 14 pour venir contre un chant 15 de l'extrémité 13.

La platine supérieure 7 comporte également une plaque 16 en forme de disque disposée transversalement à l'axe X et disposée contre un bord supérieur 17 du fourreau 12. Le renfort 14 définit en partie ce bord supérieur 17. La plaque 16 comporte une ouverture centrale 18 débouchant dans l'enceinte 8. Le connecteur 10 est monté de manière étanche au travers de cette ouverture 18. En particulier un écrou de blocage 19 retenu autour du connecteur 10 est monté à vis sur la plaque 16. Notamment un anneau d'étanchéité peut être maintenu dans une gorge annulaire formé au niveau de l'ouverture centrale 18 pour assurer ledit montage étanche du connecteur 10 au travers de la plaque 16.

Le fourreau 12 définit une surépaisseur radialement extérieure au manchon 5, telle qu'un alésage longitudinal 20 est formé dans la paroi du fourreau 12. L'alésage 20 débouche axialement en partie haute et basse. La plaque 16 comporte un orifice 21 placé en regard de l'alésage 20 de sorte qu'un moyen de fermeture peut être disposé traversant l'orifice 21 et l'alésage 20 pour retenir la plaque 16 contre le fourreau 12.

En particulier un joint d'étanchéité annulaire 22 est prévu entre le bord supérieur 17 du fourreau et une face interne de la plaque 16.

Lorsque le moyen de fermeture, qui selon un premier mode de réalisation peut être composé d'une vis 23 et d'un écrou 24, est disposé au travers de l'orifice 21 et de l'alésage 20, le joint annulaire 22 contribue à l'étanchéité de l'enceinte.

La vis 23 comporte une tête 25 en appui contre un épaulement 26 formé par une réduction du diamètre de l'orifice 21. Cette configuration permet d'avoir la tête 25 masquée dans l'épaisseur de la plaque 16. La vis comporte une portion filetée 27 dépassant de l'alésage 20 pour coopérer avec l'écrou 24. Dans ce mode de réalisation, l'écrou est en pratique constitué d'un écrou traversant 24a et d'un écrou borgne 24b tel que l'écrou traversant 24a est situé entre l'écrou borgne 24b et le fourreau 12.

Selon l'invention l'écrou 24 vient en appui contre une rondelle à épaulement 28, de manière à plaquer cette rondelle 28 contre un pourtour 31 d'une ouverture 30 en partie basse de l'alésage 20.

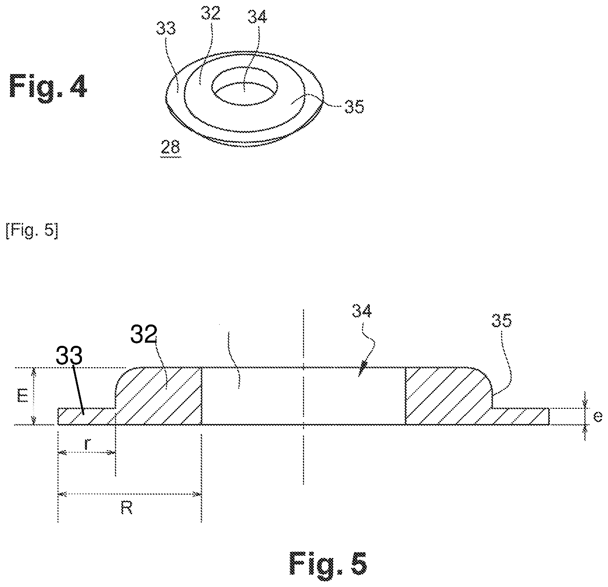

La rondelle à épaulement 28 est représentée Figure 4. Elle a une forme annulaire telle que la partie radialement intérieure 32 de la rondelle est plus épaisse que la partie radialement extérieure 33 de cette rondelle, la partie radialement extérieure définissant une collerette 33. La rondelle à épaulement 28 est de préférence réalisée en aluminium, notamment en aluminium 6082 T6.

Figure 5, la collerette 33 présente une épaisseur e inférieure à 1/3 de l'épaisseur maximale de la rondelle, et notamment inférieure à 1/3 de l'épaisseur E de la partie radialement intérieure 32 de la rondelle. La collerette 33 est par exemple d'épaisseur constante. La collerette 33 présente une dimension radiale r inférieure à la moitié, notamment de l'ordre de 40%, par exemple comprise entre 28 et 42 %, de la dimension radiale R de la rondelle. La dimensions radiale R de la rondelle étant composé de la dimension radiale r de la collerette 33 et de la dimension radiale de la partie radialement intérieure 32.

La rondelle à épaulement 28 comporte un orifice traversant centré 34 permettant le passage de la portion filetée 27 de la vis 23. L'orifice traversant 34 est suffisant large pour éviter tout contact avec la partie filetée 27. La rondelle à épaulement 28 définit un pourtour circulaire dans un plan perpendiculaire à l'axe longitudinal X, et l'orifice traversant définit également un pourtour circulaire dans un plan également perpendiculaire à l'axe longitudinal X.

Une surface de raccordement annulaire 35 définie entre la partie radialement intérieure 32 et la collerette 33 est de préférence montée en force à l'intérieur de l'alésage 20.

Le vissage de l'écrou 24 sur la portion filetée 27 constitue un dispositif de fermeture pour retenir la plaque 16 en contact étanche 22 avec le fourreau 12. Le joint d'étanchéité annulaire 22 est disposé de sorte que l'alésage 20 n'est pas en communication avec l'enceinte 8.

Cependant lorsqu'une surpression a lieu à l'intérieur de l'enceinte 8, cette enceinte étant étanche, une pression va s'exercer contre la face interne de la plaque 16 au point tel que le dispositif de fermeture va être mis en tension et la vis 23 emmenée par la plaque 16 va exercer une force en traction sur la rondelle à épaulement 28. La collerette 33 va alors se déformer et permettre une remontée à la fois de la rondelle 28 et de l'écrou 24 à l'intérieur de l'alésage 20. La collerette 33 va se rabattre de sorte qu'elle va former un angle supérieur à 90° avec la surface de raccordement annulaire 35. De préférence la déformation est telle que la rondelle peut néanmoins rester entière sans dislocation.

Un diamètre intérieur de l'alésage 20 est supérieur au diamètre extérieur de l'écrou 24. L'autorisation de ce débattement va ainsi permettre à la plaque 16 de se soulever relativement au bord supérieur 17, et ménager ainsi un échappement conséquent pour l'huile devenue gazeuse sous l'effet de la pression. La rondelle 28 forme ainsi un dispositif de décharge de pression interne sous la forme d'une évacuation supérieure dans la platine supérieure 7.

De préférence, des dispositifs de fermeture munis chacun d'un dispositif de décharge de pression interne sont équirépartis sur le pourtour de la plaque 16 de sorte que la plaque 16 se soulève par translation le long de l'axe X lorsque le dispositif de décharge autorise une rupture de l'étanchéité de l'enceinte 8 afin d'éviter son explosion. Par exemple ils sont au nombre de 12.

De manière préférentielle pour amortir le mouvement de la plaque 16 relativement au fourreau et pour éviter que ce mouvement n'aboutisse à une rupture de la jonction entre la partie filetée 27 et l'écrou 24, un tube de compression 38 est disposé autour de la vis 23. De sorte que lorsque la collerette 33 se déforme, le tube de compression 38 libre et mobile le long de la vis est repoussé par la rondelle 28 en direction d'une ouverture en partie haute 36 de l'alésage 20. L'alésage comporte un rétrécissement 37 pour définir cette ouverture en partie haute 36 de sorte que la progression de la rondelle 28, tout comme celle de l'écrou 24 est limitée par ce rétrécissement 37. La translation de l'écrou 24 toujours solidaire de la vis 23 et de la rondelle 28 est également limitée par la présence du tube de compression 38 amené à se comprimer axialement entre la rondelle 28 et le rétrécissement 37.

Le tube de compression 38 est de préférence réalisé en aluminium, et plus particulièrement dans un aluminium de dureté inférieure à celle de la rondelle 28. L'aptitude à se comprimer axialement du tube de compression 38 peut être obtenue par des perçages transversaux 39.

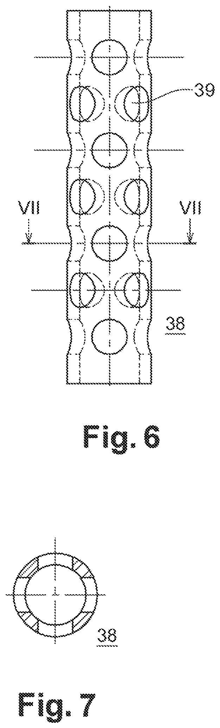

Figure 7, selon la vue représentée, le tube 38 comporte plusieurs sections chacune pourvue de perçages transversaux équirépartis, telle que des ouvrants proposés par ces perçages représentent localement plus de la moitié de la section transversale du tube de compression. Par exemple, chaque section de tube comporte 4 perçages transversaux équirépartis, et deux sections de tubes adjacentes présentes des perçages décalés de 45° d'une section à la section adjacente. En particulier le tube peut comporter sept sections percées.

Une longueur axiale du tube 38 est inférieure à celle de l'alésage 20 le long de l'axe X. Ainsi, en cas de surpression brusque, dans un premier temps la plaque 16 va pouvoir s'éloigner du fourreau sans ralentissement, et l'augmentation de l'écart entre la plaque 16 et le fourreau 12 permettant un accroissement du début de dégazage va ensuite est plus progressive au fur et à mesure de la déformation du tube de compression 38.

Par exemple une longueur initiale du tube de compression représente plus de 60% d'une longueur axiale de l'alésage 20. Par exemple, pour permettre un débattement de la plaque relativement au fourreau de l'ordre de 5 à 7 cm, l'amorti proposé sur le tube de compression est de l'ordre de 3 cm. Dans le cas d'un tube de compression apte à une réduction de moitié, le tube de compression peut avoir une longueur axiale de 6 cm. Une durée de vie souhaitée pour une bore selon l'invention étant de 30 à 40 ans, il est essentiel que les éléments qui la constitue soient pérennes. A cet effet, le tube de compression est de préférence choisi en métal. Alternativement à un tube de compression pourvu de perçages transversaux, le tube de compression peut être annelé. Alternativement, le tube de compression peut être dépourvu de perçage et réalisa dans un matériau d'une rigidité inférieure à celle des métaux, et par exemple être réalisé en polymère. De préférence, le tube de compression a une capacité en compression continue. Alternativement, le tube de compression peut être un ressort.

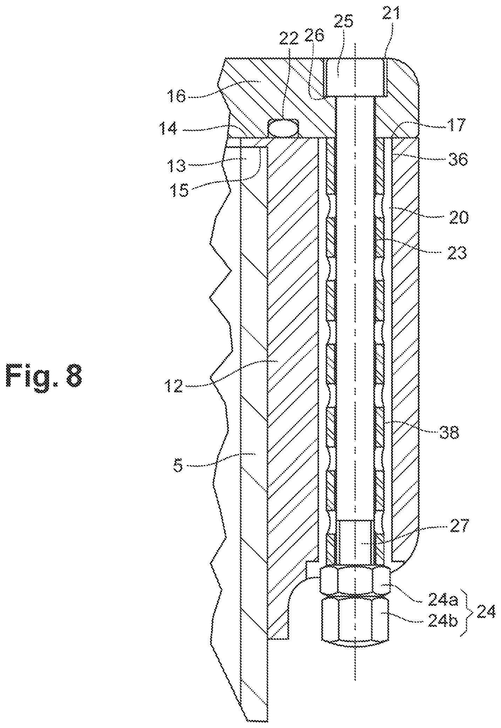

Dans un mode de réalisation alternatif qui n'est pas couvert par les revendications mais est inclus à des fins d'illustration, Figure 8, la borne ne comprend pas de rondelle à épaulement, et le tube de compression s'étend dans l'alésage 20 de sorte que l'écrou est en appui direct contre un chant du tube de compression, et d'autre part le tube de compression étant en appui à son extrémité axiale opposée contre la plaque 16, l'ouverture en partie haute 36 de l'alésage étant dépourvue d'un rétrécissement tel que 37. L'absence de ce rétrécissement 37 permet d'augmenter la course de compression du tube. Dans ce mode de réalisation, pour la rigidité du dispositif de fermeture, le tube de compression est de préférence métallique. L'avantage de la solution proposée dans ce mode de réalisation alternatif est d'éviter toute production de débris au moment de l'activation du dispositif de décharge de pression interne.

L'avantage de la solution proposée dans le premier mode de réalisation est également d'éviter toute production de débris au moment de l'activation du dispositif de décharge de pression interne, la collerette 33 restant solidaire de la partie radialement intérieure 32 de la rondelle 28, et restant de toute façon bloquée à l'intérieur de l'alésage 20.

L'invention s'applique en particulier à une terminaison d'un câble à haute tension, dont la tension nominale maximale est comprise entre 36 kV et 550 kV en courant alternatif, et ou à une tension nominale maximale de 320 kV en courant continu.

## Revendications

1. Borne anti-déflagration (1) d'une terminaison (T) d'un câble (9) de transport électrique à haute tension, la borne comportant un manchon (5), une platine inférieure (6) et une platine supérieure (7), la borne définissant une enceinte étanche (8) autour de la terminaison du câble, cette enceinte étanche contenant un fluide isolant, la borne comportant un dispositif de décharge de pression interne, borne (1) dans laquelle la platine supérieure comporte un fourreau (12) solidaire du manchon, une plaque (16) et un moyen de fermeture (23, 24) pour retenir la plaque avec le fourreau, le dispositif de décharge de pression interne comportant une rondelle à épaulement (28) coopérant avec le moyen de fermeture et le fourreau, ladite rondelle à épaulement (28) comportant une collerette (33) déformable, borne dans laquelle le moyen de fermeture comporte une vis (23) et un écrou (24), une paroi du fourreau (12) étant pourvue d'un alésage longitudinal (20) et la plaque supérieure étant pourvue d'un orifice (21), de telle sorte que la vis traverse cet orifice et l'alésage, la vis et l'écrou coopérant pour retenir la plaque en contact avec le fourreau, et dans laquelle la rondelle à épaulement (28) est disposée autour de la vis entre l'écrou et le fourreau, l'écrou (24) étant en appui contre la rondelle à épaulement (28), de manière à plaquer la rondelle à épaulement (28) contre un pourtour (31) d'une ouverture (30) en partie basse de l'alésage (20), de sorte qu'une déformation de la collerette (33) permette une remontée à la fois de la rondelle à épaulement (28) et de l'écrou (24) à l'intérieur de l'alésage (20).

2. Borne selon la revendication 1, **caractérisée en ce que** la collerette (33) a une épaisseur (e) inférieure à 1/3 d'une épaisseur maximale (E) de la rondelle.

3. Borne selon la revendication 1 ou 2, **caractérisée en ce que** la collerette a une dimension radiale (r) inférieure à la moitié, notamment de l'ordre de 40% d'une dimension radiale (R) de la rondelle.

4. Borne selon l'une des revendications précédentes,
**caractérisée en ce que** l'écrou (24) du moyen de fermeture est constitué de deux écrous (24a, 24b), l'un des écrous étant borgne (24b), l'autre étant traversant, l'écrou traversant (24a) étant disposé entre la rondelle à épaulement et l'écrou borgne.

5. Borne selon l'une des revendications précédentes,
**caractérisée en ce que** le dispositif de décharge de pression interne comporte un tube de compression (38) au contact de la rondelle à épaulement, le tube de compression pouvant notamment être logé dans l'alésage du fourreau autour de la vis (23) du moyen de fermeture.

6. Borne selon la revendication précédente, **caractérisée en ce que** le tube de compression (38) est disposé coulissant le long de la vis, et **en ce qu'**il a une longueur axiale inférieure à celle de l'alésage.

7. Borne selon l'une des revendications précédentes,
**caractérisée en ce que** l'alésage (20) débouche axialement en partie haute et en partie basse, le long d'un axe longitudinal (X) de la borne.

8. Borne selon l'une des revendications précédentes,
**caractérisée en ce que** la rondelle à épaulement définit un pourtour extérieur de section circulaire, et **en ce que** l'alésage définit un pourtour intérieur de section circulaire.

9. Borne selon la revendication précédente, **caractérisée en ce que** le tube de compression est percé transversalement (39).

10. Borne selon l'une des revendications précédentes,
**caractérisée en ce qu'**un joint d'étanchéité annulaire (22) est prévu entre un bord supérieur (17) du fourreau et une face interne de la plaque.

## Patentansprüche

1. Explosionsgeschützte Klemme (1) für einen Endverschluss (T) eines Kabels (9) zum Übertragen von elektrischer Hochspannung, die Klemme umfassend eine Hülse (5), eine untere Platine (6) und eine obere Platine (7), wobei die Klemme eine abgedichtete Einfassung (8) um den Endverschluss des Kabels definiert, die abgedichtete Einfassung ein isolierendes Fluid enthält, die Klemme umfassend eine interne Druckentlastungsvorrichtung, wobei in der Klemme (1) die obere Platine eine Ummantelung (12), die fest mit der Hülse verbunden ist, eine Platte (16) und eine Verschlusseinrichtung (23, 24) zum Halten der Platte an der Hülse umfasst, die interne Druckentlastungsvorrichtung umfassend eine Schulterscheibe (28), die mit der Verschlusseinrichtung und der Ummantelung zusammenwirkt, die Schulterscheibe (28) umfassend einen verformbaren Bund (33), wobei in der Klemme die Verschlusseinrichtung eine Schraube (23) und eine Mutter (24) umfasst, wobei eine Wand der Ummantelung (12) mit einer Längsbohrung (20) versehen ist und die obere Platte mit einer Öffnung (21) versehen ist, sodass die Schraube durch diese Öffnung und die Bohrung verläuft, die Schraube und die Mutter zusammenwirken, um die Platte in Kontakt mit der Ummantelung zu halten, und wobei die Schulterscheibe (28) zwischen der Mutter und der Ummantelung um die Schraube angeordnet ist, wobei die Mutter (24) an der Schulterscheibe (28) anliegt, um die Schulterscheibe (28) gegen einen Umfang (31) einer Öffnung (30) in einem unteren Bereich der Bohrung (20) zu pressen, sodass eine Verformung des Bunds (33) ein nach oben Ziehen sowohl der Schulterscheibe (28) als auch der Mutter (24) im Inneren der Bohrung (20) ermöglicht.

2. Klemme nach Anspruch 1, **dadurch gekennzeichnet, dass** der Bund (33) eine Stärke (e) von weniger als 1/3 einer maximalen Stärke (E) der Unterlegscheibe aufweist.

3. Klemme nach Anspruch 1 oder 2, **dadurch gekennzeichnet, dass** der Bund eine radiale Abmessung (r) von weniger als der Hälfte, insbesondere in der Größenordnung von 40 %, einer radialen Abmessung (R) der Unterlegscheibe aufweist.

4. Klemme nach einem der vorhergehenden Ansprüche, **dadurch gekennzeichnet, dass** die Mutter (24) der Verschlusseinrichtung aus zwei Muttern (24a, 24b) besteht, wobei eine der Muttern eine Hutmutter (24b) und die andere eine Durchgangsmutter ist, wobei die Durchgangsmutter (24a) zwischen der Schulterscheibe und der Hutmutter angeordnet ist.

5. Klemme nach einem der vorhergehenden Ansprüche, **dadurch gekennzeichnet, dass** die interne Druckentlastungsvorrichtung ein Druckrohr (38) in Kontakt mit der Schulterscheibe umfasst, wobei das Druckrohr insbesondere in der Bohrung der Ummantelung um der Schraube (23) der Verschlusseinrichtung aufgenommen sein kann.

6. Klemme nach dem vorherigen Anspruch, **dadurch gekennzeichnet, dass** das Druckrohr (38) gleitend entlang der Schraube angeordnet ist und dass es eine axiale Länge aufweist, die kleiner ist als die der Bohrung.

7. Klemme nach einem der vorhergehenden Ansprüche, **dadurch gekennzeichnet, dass** die Bohrung (20) axial in einem oberen Abschnitt und in einem unteren Abschnitt entlang einer Längsachse (X) der Klemme mündet.

8. Klemme nach einem der vorhergehenden Ansprüche, **dadurch gekennzeichnet, dass** die Schulterscheibe einen Außenumfang mit kreisförmigem Querschnitt definiert, und dass die Bohrung einen Innenumfang mit kreisförmigem Querschnitt definiert.

9. Klemme nach dem vorherigen Anspruch, **dadurch gekennzeichnet, dass** das Druckrohr quer durchbohrt ist (39).

10. Klemme nach einem der vorhergehenden Ansprüche, **dadurch gekennzeichnet, dass** zwischen einem oberen Rand (17) der Ummantelung und einer Innenseite der Platte eine ringförmige Dichtung (22) bereitgestellt ist.

## Claims

1. Explosion-proof terminal (1) for the termination (T) of a cable (9) for high-voltage electrical transportation, the terminal comprising a sleeve (5), a lower plate (6) and an upper plate (7), the terminal defining a sealed enclosure (8) around the termination of the cable, this sealed enclosure containing an isolating fluid, the terminal comprising a device for discharging internal pressure, terminal (1) in which the upper plate
comprises a sheath (12) secured to the sleeve, a plate (16) and a closing means (23, 24) to retain the plate with the sheath, the device for discharging internal pressure comprising a shouldered washer (28) engaging with the closing means and the sheath, said shouldered washer (28) comprising a deformable collar (33),
terminal in which the closing means comprises a screw (23) and a nut (24), a wall of the sheath (12) being provided with a longitudinal bore (20) and the upper plate being provided with an orifice (21), such that the screw passes through this orifice and the bore, the screw and the nut engaging to retain the plate in contact with the sheath, and in which the shouldered washer (28) is disposed around the screw between
the nut and the sheath, the nut (24) bearing against the shouldered washer (28), so as to flatten the shouldered washer (28) against a perimeter (31) of an opening (30) in the lower part of the bore (20), such that a deformation of the collar (33) enables a rising both of the shouldered washer (28) and of the nut (24) inside the bore (20).

2. Terminal according to claim 1, **characterised in that** the collar (33) has a thickness (e) less than 1/3 of a maximum thickness (E) of the washer.

3. Terminal according to claim 1 or 2, **characterised in that** the collar has a radial dimension (r) less than half, in particular, around 40% of a radial dimension (R) of the washer.

4. Terminal according to any one of the preceding claims, **characterised in that** the nut (24) of the closing means is constituted of two nuts (24a, 24b), one of the nuts being blind (24b), the other being through, the through nut (24a) being disposed between the shouldered washer and the blind nut.

5. Terminal according to any one of the preceding claims, **characterised in that** the device for discharging internal pressure comprises a compression tube (38) in contact with the shouldered washer, the compression tube being able, in particular, to be housed in the bore of the sheath around the screw (23) of the closing means.

6. Terminal according to the preceding claim, **characterised in that** the compression tube (38) is slidingly disposed along the screw, and **in that** it has an axial length less than that of the bore.

7. Terminal according to any one of the preceding claims, **characterised in that** the bore (20) opens axially into the upper part and into the lower part, along a longitudinal axis (X) of the terminal.

8. Terminal according to any one of the preceding claims, **characterised in that** the shouldered washer defines an outer perimeter of circular cross-section, and **in that** the bore defines an inner perimeter of circular cross-section.

9. Terminal according to the preceding claim, **characterised in that** the compression tube is transversally born (39).

10. Terminal according to any one of the preceding claims, **characterised in that** an annular seal (22) is provided between an upper edge (17) of the sheath and an internal face of the plate.
